# EUROPEAN PATENT SPECIFICATION

(11) **EP 0 846 154 B1**
(45) Date of publication and mention of the grant of the patent: **12.04.2000**
(21) Application number: 96926950.5
(22) Date of filing: 14.08.1996
(51) Int. Cl.: C11D 3/386, C11D 10/04, C11D 3/20, A23C 7/02, C11D 3/37, C11D 17/04

(54) **USE OF PORTION PACKED POWDERED LOW ALKALINE ENZYMATIC DETERGENT ON DAIRY FARMS**
VERWENDUNG VON PORTIONSWEISE ABGEPACKTEN NIEDRIGALKALISCHEN ENZYMATISCHEN REINIGUNGSMITTELN IN MILCHBETRIEBEN
UTILISATION EN EXPLOITATION LAITIERE DE DETERGENT ENZYMATIQUE FAIBLEMENT ALCALIN EN SACHETS DE POUDRE UNIDOSES

(30) Priority: 15.08.1995 US 2348 P
(43) Date of publication of application: 10.06.1998
(73) Proprietor: UNILEVER N.V., 3013 AL Rotterdam (NL); UNILEVER PLC, London EC4P 4BQ (GB)
(72) Inventor: ROUILLARD, Jacques, R., Brighton, MI 48116 (US)
(74) Representative: Rosen Jacobson, Frans Lucas M.
(86) International application number: US9613120
(87) International publication number: WO9707190

(56) References cited:
- DE-A- 2 259 201
- US-A- 4 212 761
- US-A- 5 064 561
- DATABASE WPI Section Ch, Week 9233 Derwent Publications Ltd., London, GB; Class D16, AN 92-272945 XP002021082 & JP 04 185 699 A (NIPPON TEIHPOHRU KK) , 2 July 1992

## Description

### FIELD OF THE INVENTION

This invention relates to the use of portion packed powdered low alkaline enzymatic detergent in cleaning dairy equipment such as milk lines of a dairy installation.

### BACKGROUND OF THE INVENTION

Highly alkaline chlorinated cleaners have been used in CIP (clean-in-place) systems to ensure minimum contamination and deposit build up in milk lines of dairy farms. The highly alkaline cleaner is prepared by measuring a desired amount of the powdered or liquid material into a heated mixing tank containing the usual volume of water for cleaning purposes. The alkaline material is dissolved or diluted in the tank at a temperature usually in the range of 60°C to 75°C. The material is then pumped through the milk lines and discharged from the milk lines to effect cleaning thereof. As the cleaning solution travels through the milk lines, it cools to a temperature usually in the range of 35°C to 45°C at the discharge end of the milk line. At this temperature, it has been found that fats, proteins and other material fall out of the solution at the reduced temperature and deposit on the walls of the discharge end of the milk line. This requires additional cleaning of the discharge end either by disassembly or by inserting a bristle brush or the like into the discharge end to effect removal of any materials which have dissociated from the solution at the cooler discharge end of the milk line.

Although this has been common practice, it would be preferable to provide a formulation which can be readily used at the dairy site to effect cleaning of the milk lines and ensure that the discharge end is also successfully cleaned at the same time.

Liquid enzyme detergent formulations have been proposed for various types of cleaning operations including the CIP operations. Liquid formulations may be stored in drums and automatically dispensed as needed in the CIP operation. There is however a problem in stabilizing enzymes in aqueous systems. Examples of aqueous enzyme detergent formulations are described in US-A-4,243,543 and US-A-5,064,561 and US-A-5,783,542, published on 21.07.98. The enzyme formulation described in the aforementioned co-pending application provides a very stable formulation for the enzyme when present in free water. This system greatly facilitates formulation of the enzyme detergent and its dispensing.

Although automated dispensers are widely used in large dairy operations and in manufacturing facilities, most dairy farms are of a size that cannot justify the cost of automated dispensing and its continued maintenance. Hence farmers prefer the use of the powdered highly alkaline chlorinated cleaners which can be stored in powder form, made up as required and the use solution dispensed. In addition to the above problem noted with the highly alkaline chlorinated cleaners, there is also a problem with the pH of the discharge as well as the discharge containing chlorides and phosphates. It is therefore desirable to move towards a cleaning formulation which is of low alkalinity. US-A-4,212,761 describes a powdered enzyme detergent formulation for dairy cleaning. The formulation requires the use of phosphate to control hard water and the use solution cannot be used at an operating temperature in excess of 50°C which is well below the normal temperature at which farmers clean dairy lines with the highly alkaline material. That temperature range is normally 60°C to 70°C. The farmers therefore have to take extra steps to ensure that the temperature of the used solution is kept below 50°C and as well continue to cope with phosphates in the discharge. The powdered enzymatic detergent is supplied in a drum and as suggested in that patent, the farmer removes from the drum, a desired amount for dissolution in the predetermined volume of water.

DE-A-2259201 discloses powdered, low alkaline detergent compositions for cleaning milk cans, comprising protease, ethoxylated nonylphenol, sodium carbonate and phosphate. JP-A-4185699 discloses the use of powdered, low alkaline detergent compositions for cleaning automatic milker, comprising protease, nonionic, sodium carbonate, sodium bicarbonate and defoaming agent.

Applicants have found however, with the formulation of this invention, that it may be phosphate-free regardless of the hardness of the water, use less enzyme than is required in US-A-4,212,761 and works well at an operating temperature of 55°C to 65°C. Particularly effective cleaning is achieved at the cooler end of the milk discharge where the use solution temperature drops to 35°C to 45°C.

### SUMMARY OF THE INVENTION

In accordance with an aspect of this invention, the use is provided of a portion packed powdered low alkaline enzymatic detergent being free of phosphate and comprising:
i) 0.1 to 3% by weight of a proteolytic enzyme;
ii) 0.5 to 8% by weight of a surfactant selected from the group consisting of a blend of an alkali salt of a C6 - C12 fatty acid and a linear C8 - C18 polyoxyalkylene alcohol, block copolymers of propylene and ethylene oxide, linear primary alcohol ethoxylates, secondary alcohol ethoxylates and mixtures of poly (oxyethylene/oxypropylene) mono-hexyl, octyl and decyl ethers;
iii) 1 to 8% by weight of a water conditioner being a polyacrylic acid having a molecular weight of 3000 to 6000;
iv) up to 60% by weight of a source of alkalinity selected from the group consisting of sodium carbonate, potassium carbonate, sodium bicarbonate and potassium bi-carbonate,
wherein said source of alkalinity provides a solution pH of 8.5 to 10.5 when said detergent is dissolved in water for cleaning dairy equipment.

In accordance with another aspect of the invention, a method is provided for cleaning milk lines at a dairy installation. The method comprises:
i) dissolving at least one of the portion packed detergents used according to the above aspect in a quantity of water which provides a use solution;
ii) heating the solution to 55°C to 65°C;
iii) introducing the heated use solution into the milk lines, whereby the use solution cools to a reduced temperature of 35°C to 45°C at a discharge end of the milk lines;
iv) the use solution at the reduced temperature, cleaning the milk lines at the discharge end to avoid build-up of milk residues at the discharge end.

### DETAILED DESCRIPTION OF THE PREFERRED EMBODIMENTS

A significant problem has been overcome by applicant's method of clean-in-place for dairy lines. At the lower discharge temperatures, the higher melting materials in the form of stearates, oleoates and the like tend to accumulate. Applicant has surprisingly found that in the use of this portion packed detergent formulation, the enzymes and surfactants present, block or reduce accumulation of the fats and other materials, proteins and the like, which normally accumulate at the discharge end. Furthermore, in the use of this formulation, a low alkaline material is provided which when dissolved, provides preferably a solution pH of 9.5 which is suitable for discharge at the dairy farm.

Although the most significant use for this portion packed detergent formulation is in cleaning dairy lines where the farmer simply uses existing equipment to effect the cleaning, it is understood that the detergent formulation in portion packed form may be used in a variety of other situations where it is desired to make up on the spot a use solution knowing the ratio of water to each package of enzyme detergent of this invention. Applicant has found that detergent formulations which are shipped in bulk form such as in crates, boxes, drums and the like tend to segregate particularly with enzymatic detergents where the enzyme can segregate separate from the particles of surfactant and sources of alkalinity. With this segregation, a user cannot be assured that on a consistent basis, the correct amount of formulation components are dissolved for each use and hence ineffective cleaning can result. By portion packaging, the detergent formulation, after it is made, segregation in the package is not a problem. Preferably, a 454 gm package is made up as a lot or portion. This amount of detergent formulation may be dissolved in about 115 litres of water. This provides a preferred use level of about 30 gm per 7.5 litres of water or about 0.4% by weight of detergent per volume of solution. The dissolved enzymatic detergent may be used for example in cleaning components of the milking parlour and milk storage devices and milk tank agitation devices. Such cleaning may be effected by placing the parts in the use solution and allowing them to soak in the solution for about 20 to 30 minutes. When it comes to cleaning of milk lines, as already noted, the enzymatic detergent of this invention may be used at a much higher starting temperature in the range of 55°C to 65°C, where the solution is pumped through the milk lines for 10 to 20 minutes depending upon the volume of use solution and flow rate thereof to provide the desired cleaning.

The source of alkalinity is preferably a sodium or potassium carbonate, mixed with a sodium or potassium bi-carbonate to provide the desired effluent pH of 8,5 - 10,5, preferably 9.5. It is understood that the source of alkalinity may also be one of the sodium or potassium carbonates or sodium or potassium bi-carbonate. In accordance with the preferred embodiment, the preferred combination is potassium carbonate and sodium bi-carbonate. The preffered ratio of potassium carbonate to sodium bi-carbonate is approximately 1:2. It is understood of course that alternative sources of alkalinity may be used to provide the desired pH, such as hydroxide based alkaline materials with suitable buffers. The selection of the carbonates and/or bicarbonates and the amount thereof is based on the end use and desired pH for the effluent. As a guide in selecting the source of alkalinity, it should be equivalent to about .006% Na₂O. For example, combinations of sodium metasilicate and sodium sulfate or alkaline metalhydroxides and sodium sulfate can be used to provide the desired degree of alkalinity in the pH range of 8.5 to 10.5 and most preferably at 9.5.

The enzyme in powdered form is preferably coated particles of enzyme which may be an endoprotease of the serine type. The effective amount of the enzyme in the concentrate is sufficient to provide the desired degree of activity which is usually in excess of 85% of the original activity of the enzyme. The preferred enzyme is that sold under the trade mark Esperase and may be obtained from Novo Industries, of Denmark. The enzyme is prepared by submerged fermentation of a selected microorganism that can be classified as an alkalophilic species of bacillus. This type of enzyme has a very broad substrate specificity and is capable of hydrolysing most peptide bonds within a protein molecule.

A measure of the activity of the enzyme may be in KNPU units per gram. The preferred enzyme has an activity of 6.0 KNPU per gram. The quantity of enzyme used in the formulation is preferably in the range of 0.1 to 3% by weight. In accordance with a preferred embodiment of the invention 1.08 parts of the protease is used per 100 parts of carbonate in the composition. By carbonate, it is understood to include both the carbonate and bi-carbonate. In the dry composition, this equates to 0.06 KNPU per gram of composition. In the use solution, this equates to 4 milligrams of enzyme per 100 mls of use solution of 6.0 KNPU active enzyme. As noted in the aforementioned U.S. Patent 4,212,761, performance of the enzyme apparently decreases below a concentration of 0.001 % weight per volume for an enzyme activity of 4KNPU per gram. However, in accordance with this invention, enzyme use concentrations as low as 0.007 % weight per volume have provided acceptable cleaning results, thereby indicating a synergy in the formulation, not only from the stand point of cleaning but as well the ability to be used at a higher temperature.

Preferably, the surfactant is a blend of an alkali salt of a (C6-C12) fatty acid and a linear (C8-C18) polyoxyalkylene alcohol. The fatty acid is preferably a (C8-C10) such as an octanoic acid, nonanoic and decanoic acid. The preferred alkali salts thereof are potassium and sodium. The linear polyoxyalkylene is considered to be a nonionic with C8 to C18 carbon atoms in the linear alkyl chain, with the chain terminating in alcohol is usually either ethoxylated and/or propoxylated. The component of the blend can be readily obtained from a host of suppliers of anionic and nonionic surfactants. Other suitable surfactants include various ethoxylates and propoxylates such as block copolymers of propylene and ethylene oxide having molecular weights in the range of 1500 to 3800 and sold under the trade-mark "Pluronic"; linear primary alcohol ethoxylates of C9 - C15 and sold under the trade mark "Neodols"; secondary alcohol ethoxylates of C11 - C15 and sold under the trade mark "Tergitols"; and mixtures of poly(oxyethylene/oxypropylene) mono hexyl, octyl and decyl ethers and sold under the trade mark "Polytergents". These surfactants have been given the CAS #'s 9003-11-6; 68131-39-5; 66455-14-9; 68439-46-3; 84133-50-6; 52232-09-4; 37311-02-7; and 37251-67-5. The composition comprises preferably 0.5 to 8.0% by weight of the surfactant. This percentage by weight of surfactant is considerably reduced compared to prior art dairy cleaning formulations.

The water conditioner is a polyacrylate. The polyacrylates act as anti-redeposition agents and have a molecular weight ranging form 3000 to 6000 where the preferred polyacrylate is a homo polymer sold under the trademark Acusol 445 by Rohm and Haas Company. Other polyacrylates include co-polymers of acrylic acid, maleic acid and other olefins and terpolymers, which are a mixture of monomers. It has been found that this composition functions very well in varying water hardness. There is no need to use polyphosphates to control water hardness problems, hence, providing a phosphate free enzymatic detergent composition.

The powdered detergent is portion packed in a suitable package which is readily opened to allow direct dumping of the contents into the vat of hot water. Portion packaging of the detergent reduces handling of the material and minimizes exposure of the operator to the powdered material. Effectively, said portion pack is a tearable pouch of a laminated outer paper wrap, an intermediate foil and an inner plastic film. If desirable, the detergent may be portion packed in water soluble materials such that the pack does not have to be opened but instead simply dropped in the vat of hot water where the packaging as well as its contents are immediately dissolved.

In use, the detergent preferably provides in the range of .002% - .006 w/w of the surfactant, .016 - .064% w/w of the anti-redeposition agent, and .002% - .004 w/w of a coated enzyme product.

The powdered composition is preferably made by mixing the selected carbonate and/or bi-carbonate with the anti-redeposition agent which may be Acusol for a few minutes. The surfactant which is normally in liquid form may be sprayed into the mixed material with the mixer running. Mixing is continued for up to a minute or more to complete the addition of the surfactant, where the surfactant is soaked up by the powder. The powdered enzyme is then added to the mixer and the dry material mixed for a further period of time to complete distribution of the enzyme in the powdered material. The material is then packaged in portion sizes, preferably 454 gm packages for use in about 115 litres of heated water.

It is appreciated that several variations may be provided in respect of the preferred embodiments. For example, the anti-redeposition agent may be sodium tripolyphosphate if phosphates in the discharge are not a problem. Other water hardness control agents include sodium citrate. Surfactants may also include non-ionics, anionics or amphoterics, rather than the suggested blend. Different enzymes may also be used such as amylases and lipases with other varieties of proteolytic enzymes.

It has been found that by the use of this portion packed powdered enzymatic detergent, it can be introduced to the dairy lines at temperatures usually in the range of 50°C to 65°C, to effect acceptable cleaning throughout the lines including the discharge end where discharge usually occurs at temperatures in the range of 35°C to 45°C.

## Claims

1. Use of a portion packed powdered low alkaline enzymatic detergent being free of phosphate and comprising:
i) 0.1 to 3% by weight of a proteolytic enzyme;
ii) 0.5 to 8% by weight of a surfactant selected from the group consisting of a blend of an alkali salt of a C6 - C12 fatty acid and a linear C8 - C18 polyoxyalkylene alcohol, block copolymers of propylene and ethylene oxide, linear primary alcohol ethoxylates, secondary alcohol ethoxylates and mixtures of poly (oxyethylene/oxypropylene) mono-hexyl, octyl and decyl ethers;
iii) 1 to 8% by weight of a water conditioner being a polyacrylic acid having a molecular weight of 3000 to 6000;
iv) up to 60% by weight of a source of alkalinity selected from the group consisting of sodium carbonate, potassium carbonate, sodium bi-carbonate and potassium bi-carbonate, wherein said source of alkalinity provides a solution pH of 8.5 to 10.5 when said detergent is dissolved in water, for cleaning dairy equipment.

2. Use of a portion packed detergent of claim 1 wherein said surfactant is said blend wherein said linear C8-C18 polyoxyalkylene alcohol is a C8 - C18 ethoxylated propoxylated alcohol.

3. Use of a portion packed detergent of claim 1 wherein said portion pack is a tearable pouch of a laminated outer paper wrap, an intermediate foil and an inner plastic film.

4. A method for cleaning milk lines at a dairy installation, said method comprising:
i) dissolving at least one portion packed. detergent used according to any one of claims 1 to 3 in quantity of water to provide a use solution;
ii) heating said solution to 55°C to 65°C;
iii) introducing said heated use solution into said milk lines, whereby said use solution cools to a reduced temperature of 35°C to 45°C at a discharge end of said milk lines;
iv) said use solution at said reduced temperature, cleaning said milk lines at said discharge end to avoid build-up of milk residues at said discharge end.

5. A method of claim 4 wherein said quantity of water is selected to provide for a flow of use solution through said dairy line for 10 to 15 minutes.

6. A method of claim 5 wherein said use solution is pumped through said dairy line.

## Revendications

1. Utilisation d'un détergent enzymatique faiblement alcalin en poudre emballé en lots qui est exempt de phosphate et qui comprend :
i) 0,1 à 3% en poids d'une enzyme protéolytique,
ii) 0,5 à 8% en poids d'un tensioactif choisi parmi un mélange d'un sel alcalin d'un acide gras en C6-12 et d'un alcool de polyoxyalkylène linéaire en C8-18, de copolymères séquencés de propylène et oxyde d'éthylène, d'éthoxylates d'alcools primaires linéaires, d'éthoxylates d'alcools secondaires et de mélanges de monohexyl-, octyl- et décyl- éthers de poly(oxyéthylène/oxypropylène) ;
iii) 1 à 8% en poids d'un conditionneur aqueux qui est un poly(acide acrylique) ayant une masse moléculaire de 3000 à 6000 ;
iv) jusqu'à 60% en poids d'une source d'alcalinité choisie parmi le carbonate de sodium, le carbonate de potassium, le bicarbonate de sodium et le bicarbonate de potassium, ladite source d'alcalinité fournissant un pH de solution de 8,5 à 10,5 quand ledit détergent est dissous dans l'eau pour le nettoyage des équipements laitiers.

2. Utilisation d'un détergent emballé en lots selon la revendication 1, dans laquelle ledit tensioactif est ledit mélange dans lequel ledit alcool de polyoxyalkylène en C8-18 linéaire est un alcool propoxylé éthoxylé en C8-18.

3. Utilisation d'un détergent emballé en lots selon la revendication 1, dans laquelle ledit emballage en lots est un sachet séparable formé d'une enveloppe de papier externe stratifiée, d'un clinquant intermédiaire et d'un film en plastique interne.

4. Procédé pour nettoyer les chaînes de lait dans une installation laitière, ledit procédé comprenant:
i) la dissolution d'au moins un lot de détergent emballé utilisé selon l'une quelconque des revendications 1 à 3 dans une quantité d'eau pour fournir une solution d'utilisation ;
ii) le chauffage de ladite solution à 55 à 65°C ;
iii) l'introduction de ladite solution d'utilisation chauffée dans lesdites chaînes de lait, de sorte que ladite solution d'utilisation refroidit à une température réduite de 35 à 45°C à une extrémité de décharge desdites chaînes de lait ;
iv) le nettoyage avec ladite solution d'utilisation à ladite température réduite desdites chaînes de lait à ladite extrémité de décharge pour éviter l'accumulation des résidus de lait à ladite extrémité de décharge.

5. Procédé selon la revendication 4, dans lequel ladite quantité d'eau est choisie pour fournir un écoulement de la solution d'utilisation dans ladite chaîne de lait pendant environ 10 à 15 minutes.

6. Procédé selon la revendication 5, dans lequel ladite solution d'utilisation est pompée dans ladite chaîne de lait.

## Patentansprüche

1. Verwendung eines portionsweise verpackten pulverförmigen, schwach alkalischen, enzymatischen Waschmittels, das frei von Phosphat ist, und umfaßt:
i) 0,1 bis 3 Gewichtsprozent eines proteolytischen Enzyms;
ii) 0,5 bis 8 Gewichtsprozent eines Tensids, ausgewählt aus der Gruppe, bestehend aus einem Gemisch eines Alkalimetallsalzes einer C₆-C₁₂-Fettsäure und eines linearen C₈-C₁₈-Polyoxyalkylenalkohols, Block-Copolymeren von Propylen- und Ethylenoxid, linearen primären Alkoholethoxylaten, sekundären Alkoholethoxylaten und Gemischen von Poly(oxyethylen/oxypropylen)monohexyl-, -octyl- und -decylethern;
iii) 1 bis 8 Gewichtsprozent eines Wasserkonditionierungsmittels, das eine Polyacrylsäure mit einem Molekulargewicht von 3000 bis 6000 darstellt;
iv) bis zu 60 Gewichsprozent einer Quelle für Alkalinität, ausgewählt aus der Gruppe, bestehend aus Natriumcarbonat, Kaliumcarbonat, Natriumbicarbonat und Kaliumbicarbonat, wobei die Quelle für Alkalinität eine Lösung mit einem pH-Wert von 8,5 bis 10,5 bereitstellt, wenn das Waschmittel in Wasser gelöst wird, zur Reinigung von Milchwirtschaftsgeräten.

2. Verwendung eines portionsweise verpackten Waschmittels nach Anspruch 1, wobei das Tensid das Gemisch ist, bei dem der lineare C₈-C₁₈-Polyoxyalkylenalkohol ein ethoxylierter propoxylierter C₈-C₁₈-Alkohol ist.

3. Verwendung eines portionsweise verpackten Waschmittels nach Anspruch 1, wobei die Portionsverpackung ein zerreißbares Säckchen aus einer laminierten äußeren Papier Umhüllung, einer Zwischenfolie und einem inneren Kunststoffilm ist.

4. Verfahren zur Reinigung von Milchleitungen in einer Milchwirtschaftsanlage, wobei das Verfahren umfaßt:
i) Auflösen mindestens eines portionsweise verpackten nach einem der Ansprüche 1 bis 3 verwendeten Waschmittels, in einer Menge Wasser zur Bereitstellung einer Verwendungslösung;
ii) Erhitzen der Lösung auf 55°C bis 65°C;
iii) Einführen der erhitzten Verwendungslösung in die Milchleitungen, wodurch die Verwendungslösung auf eine verminderte Temperatur von 35°C bis 45°C am Ausgabeende der Milchleitungen abkühlt;
iv) wobei die Verwendungslösung bei der verminderten Temperatur die Milchleitungen am Ausgabeende zur Vermeidung von Ansammlungen von Milchrückständen an dem Ausgabeende reinigt.

5. Verfahren nach Anspruch 4, wobei die Menge an Wasser so ausgewählt wird, daß 10 bis 15 Minuten für einen Strom der Verwendungslösung durch die Leitung in einem Milchwirtschaftsbetrieb gesorgt ist.

6. Verfahren nach Anspruch 5, wobei die Verwendungslösung durch die Leitung in einem Milchwirtschaftsbetrieb gepumpt wird.
